# EUROPÄISCHE PATENTANMELDUNG

(11) **EP 4 542 414 A1**
(43) Veröffentlichungstag der Anmeldung: **23.04.2025**
(21) Anmeldenummer: 23204456.0
(22) Anmeldetag: 18.10.2023
(51) Int. Cl.: G06F 16/25, G06F 16/27

(54) **COMPUTER-IMPLEMENTIERTES VERFAHREN UND SYSTEM ZUR SYNCHRONISATION VON DATENELEMENTEN**

(71) Anmelder: Siemens Aktiengesellschaft, 80333 München (DE)
(72) Erfinder: Kobel, Konstantin, 1130 Wien (AT); Stiller, Philipp, 2104 Spillern (AT); Kobel, Valentin, 1130 Wien (AT); Schenk, Felix, 2345 Brunn am Gebirge (AT); Seiler, Alexander, 1220 Wien (AT); Wattar, Mohammad Bashar, 1120 Wien (AT)
(74) Vertreter: Siemens Patent Attorneys

(57) **Zusammenfassung**

Computer-implementiertes Verfahren zur Synchronisation von Datenelementen eines Klienten-Server-Systems, umfassend einen Server (S), einen ersten Klienten (C1) mit einem ersten Service-Modul (BE1), umfassend eine erste Datenbank, und zumindest einen zweiten Klienten (C2) mit einem jeweiligen zweiten Service-Modul (BE2), umfassend eine zweite Datenbank, wobei zumindest teilweise Datenbankelemente der ersten Datenbank, zugreifbar mit einem Datenprotokoll-Format, welches nicht das MQTT-Protokoll ist, mit der jeweiligen zweiten Datenbank, zugreifbar in dem Datenprotokoll-Format, durch die beteiligten Klienten synchronisiert werden,
wobei die Synchronisierung unter Verwendung des MQTT-Protokolls erfolgt,
und die zu synchronisierenden Datenbankelemente mithilfe eines ersten Brücken-Moduls (BR1), welches vom ersten Klienten (C1) umfasst ist, von dem Datenprotokoll-Format in das MQTTS-Protokoll konvertiert werden und mithilfe eines zweiten Brücken-Moduls (BR2), welches von dem jeweiligen zumindest einen zweiten Klienten (C1) umfasst ist, wieder von dem MQTTS-Protokoll in das Datenprotokoll-Format konvertiert werden.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein Klienten-Server-System zur Synchronisation von Datenelementen des Klienten-Server-Systems, umfassend einen Server, einen ersten Klienten mit einem ersten Service-Modul, umfassend eine erste Datenbank, und zumindest einen zweiten Klienten mit einem jeweiligen zweiten Service-Modul, umfassend eine zweite Datenbank.

Die Erfindung betrifft ferner ein Computerprogramm-Produkt und ein Speichermedium.

Die Erfindung ermöglicht den Datenaustausch zwischen einer Anwendungs-Datenbank auf einem Industrial Edge Gerät mit der weiteren Anwendungs-Datenbank an einem verbundenen Server, wie die Siemens IoT Cloud "MindSphere" beziehungsweise "Insights Hub".

Der Datenaustausch zwischen der Applikations-Datenbank auf der Industrial Edge Plattform und der Applikations-Datenbank in der IoT Cloud MindSphere wird im Stand der Technik jedoch nur über Synchronisierung mit eingeschränkter Funktionalität durchgeführt.

Diese Art der Synchronisierung lässt nur beschränkte Datenmodelle zu und ist insbesondere auf die Synchronisierung von Zeitseriendaten ausgelegt, welche aus einem Wert, einem Zeitstempel und einer Datenpunkts-Kennung bestehen, sowie von rudimentären Ereignissen, engl. "events", welche aus einer Quellen-Kennung, eines Werts hinsichtlich der Schwere des Ereignisses, einigen Informationen zu der auslösenden Maschine, einer Beschreibung des Ereignisses und einem Zeitstempel bestehen.

Die kontinuierliche Synchronisierung zweier eigenständiger Datenbanken, beispielsweise zwischen einzelnen Klienten des Klienten-Server-Systems, lässt sich über diesen Mechanismus leider nicht zufriedenstellend bewerkstelligen, da die Art der Datensätze im Stand der Technik nicht hinreichend für die Erfordernisse bei einer Synchronisierung eingerichtet ist.

Mit anderen Worten lässt sich im Stand der Technik keine kontinuierliche Synchronisation zweier Anwendungs-Datenbanken bewerkstelligen.

Ein weiteres Problem im Stand der Technik liegt darin, dass die Synchronisierung von Datenbanken nicht transparent erfolgt, und eine Fehlersuche im System bei Synchronisierungsproblemen sehr schwierig sein kann.

Die Verwendung von Datenbanken zur Speicherung von lokalem Expertenwissen wird zunehmend wichtiger, insbesondere für die Speicherung von Modellen zur Anwendung von maschinellem Lernen, aber beispielsweise auch einfachere Daten bezüglich der Wartung von Geräten, wie Anleitungen zur Behandlung von technischen Problemen bei Geräten, wie eine verbundene CNC-Fräsmaschine.

Daher kommt der Synchronisierung von Datenbanken oder anderen Datenspeichern mit entsprechenden Datenstrukturen in einem Klienten-Server-System eine immer stärker werdende Bedeutung zu.

Es ist daher Aufgabe der Erfindung ein Verfahren und ein System bereitzustellen, welches eine verbesserte Synchronisierung von Datenbanken in einem Klienten-Server-Systems bereitstellt.

Die erfindungsgemäße Aufgabe wird durch ein Verfahren eingangs genannter Art gelöst, wobei zumindest teilweise Datenbankelemente der ersten Datenbank, zugreifbar mit einem Datenprotokoll-Format, welches nicht das MQTT-Protokoll ist, mit der jeweiligen zweiten Datenbank, zugreifbar in dem Datenprotokoll-Format, durch die beteiligten Klienten synchronisiert werden, wobei die Synchronisierung unter Verwendung des MQTT-Protokolls erfolgt, und die zu synchronisierenden Datenbankelemente mithilfe eines ersten Brücken-Moduls, welches vom ersten Klienten umfasst ist, von dem Datenprotokoll-Format in das MQTTS-Protokoll konvertiert werden und mithilfe eines zweiten Brücken-Moduls, welches von dem jeweiligen zumindest einen zweiten Klienten umfasst ist, wieder von dem MQTTS-Protokoll in das Datenprotokoll-Format konvertiert werden.

Mit dem Datenbank-Format beziehungsweise Datenprotokoll-Format der Datenelemente, das heißt Daten-Protokoll, ist natürlich deren Repräsentation in einem ersten Protokoll gemeint, welche jedoch nicht nach dem MQTTS-Standard definiert ist, gegenüber einem zweiten (Übertragungs-) Protokoll zur Übertragung der Datenelemente zwischen zwei Klienten, beispielsweise nach dem WebSocket-Standard.

Es ist daher vorgesehen, dass Datenelemente von Datenbanken zweier Klienten, welche mithilfe eines ersten Protokolls eines jeweiligen Service-Moduls abgerufen oder abgespeichert werden können, wie ein Protokoll nach dem WebSocket-Standard, zur Datenübertragung zwischen zwei Klienten temporär in ein zweites Protokoll nach dem MQTTS-Standard konvertiert werden.

Das Protokoll des Service-Moduls unterscheidet sich dabei vom MQTTS-Protokoll.

Unter der Synchronisierung von Datenbankelementen zwischen der ersten Datenbank und der zweiten Datenbank versteht man die Datenübertragung der Datenbankelemente vom ersten Klienten zum zweiten Klienten.

Dabei kann die Anwendungs-Datenbank auf einem Industrial Edge Gerät mit einem Service-Modul kontinuierlich mit der Applikations-Datenbank auf einem anderen Industrial Edge Gerät abgeglichen werden, was durch ein erfindungsgemäßes System unter Verwendung eines Betriebsmoduls, engl. "Asset Operations Analytics", erfolgt.

Mit Hilfe des Server-Betriebsmoduls können beispielsweise Daten in einer oder mehreren zentralen Datenbanken gesammelt und verarbeitet werden, wie durch Anwendung von Wartungs-Prognosen mithilfe künstlicher Intelligenz.

Das Server-Betriebsmodul, auch als *"*Asset Operations Analytics*"*-Modul bezeichnet, bietet auf der Insights Hub Plattform eine zentrale Datenbank, bei welcher Industrial Edge Instanzen für ein jeweiliges Industrial Edge Gerät verteilt werden. Entsprechend gibt es hier unter Umständen mehrere Instanzen, welche jedoch nicht zwingend zentral organisiert sein müssen.

Wartungs-Prognosen können von anderen Anwendungen in der Form von sogenannten "Events" erzeugt werden und im Modul "Asset Operations Analytics" gespeichert werden, wobei "Asset Operations Analytics" selbst die Dokumentation der Ereignisse ermöglicht.

Die Erfindung ermöglicht somit beispielsweise den Datenaustausch zwischen mehreren Wissensdatenbanken auf unterschiedlichen Industrial Edge Geräten, welche beispielsweise bei unterschiedlichen Prozessschritten einer Produktionsanlage angesiedelt sind.

Es geht daher nicht nur um eine vollständige Synchronisierung von Datenbanken, sondern auch nur um den teilweisen Datenabgleich von Datensätzen zwischen zwei Datenbanken.

Eine Datenbank im Kontext der Erfindung ist ein Datenspeicher, welcher eine große Anzahl von Datensätzen in Bezug auf ein einzelnes Element des Datenspeichers umfasst, effizient in einer organisierten Form speichert und abrufbar macht.

Eine Datenbank, auch Datenbanksystem genannt, ist ein System zur elektronischen Datenverwaltung. Die wesentliche Aufgabe einer Datenbank ist es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen.

Ein Datenbanksystem besteht üblicherweise aus zwei Teilen:
- der Verwaltungssoftware oder Datenbankmanagementsystem, und
- der Menge der zu verwaltenden Daten, also der Datenbank im engeren Sinn.

Die Verwaltungssoftware organisiert intern die strukturierte Speicherung der Daten und kontrolliert alle lesenden und schreibenden Zugriffe auf die Datenbank. Zur Abfrage und Verwaltung der Daten bietet ein Datenbanksystem eine Datenbanksprache an, um einen organisierten Zugriff auf die Elemente der Datenbank zu erlauben.

Es können zwei, drei, zehn, hundert oder auch mehr zweite Klienten mit dem ersten Klienten erfindungsgemäß synchronisiert werden.

In einer Weiterbildung der Erfindung ist es vorgesehen, dass die Synchronisierung erst nach einer erfolgreichen Authentifizierung der beteiligten Klienten durch den Server des Klienten-Server-Systems erfolgt.

Dadurch wird eine zusätzliche Daten-Sicherheit für das System erreicht, da nur eine authentifizierter Datenzugriff auf die Quell-Datenbank und die Ziel-Datenbank erfolgt.

In einer Weiterbildung der Erfindung ist es vorgesehen, dass die Authentifizierung mithilfe eines vom Server umfassten Service-Moduls erfolgt, welches mit den Service-Modulen der beteiligten Klienten kommuniziert, und vorzugsweise die Authentifizierung durch die jeweiligen Klienten initiiert wird.

Dadurch wird eine zuverlässige und effiziente Synchronisation erreicht, ohne dass der Vorgang vom Server initiiert werden muss, da die Kommunikation für die Authentifizierung vereinfacht wird und der Server entlastet werden kann.

Eine erste Authentifizierung kann beispielsweise am Server durch Insights Hub getätigt werden, und eine zweite Authentifizierung durch die Verschlüsselung der Datenpakete dahingehend erfolgt, dass nur der Server die Nachricht mit dem korrekten Schlüssel korrekt entschlüsseln kann.

In einer Weiterbildung der Erfindung ist es vorgesehen, dass die Kommunikation der Authentifizierung unter Verwendung des HTTPS-Protokolls erfolgt.

Dadurch wird eine zuverlässige Kommunikation für die Authentifizierung bereitgestellt.

In einer Weiterbildung der Erfindung ist es vorgesehen, dass die Synchronisierung direkt zwischen Klienten erfolgt.

Dadurch wird eine effiziente und performante Synchronisierung über eine Datenverbindung zwischen Kommunikation-Modulen von Klienten ermöglicht, ohne den Server zu involvieren und somit den Server nicht zusätzlich zu belasten.

Dieser Vorteil dieser direkten Synchronisierung wird umso größer, je mehr zweite Klienten mit dem ersten Klienten synchronisiert werden.

Die erfindungsgemäße Aufgabe wird durch ein Klienten-Server-System gelöst, umfassend einen Server, einen ersten Klienten mit einer ersten Datenbank eines ersten Service-Moduls und zumindest einen zweiten Klienten mit einer zweiten Datenbank eines jeweiligen zweiten Service-Moduls, und die Klienten dazu eingerichtet sind, das erfindungsgemäße Verfahren auszuführen.

In einer Weiterbildung der Erfindung ist es vorgesehen, dass die Klienten und der Server dazu eingerichtet sind, gemeinsam das erfindungsgemäße Verfahren auszuführen.

Die erfindungsgemäße Aufgabe wird durch ein Computerprogramm-Produkt gelöst, umfassend Befehle, welche bei deren Ausführung durch einen Computer diesen veranlassen, das erfindungsgemäße Verfahren auszuführen.

Die erfindungsgemäße Aufgabe wird durch einen elektronisches Speichermedium gelöst, umfassend ein erfindungsgemäßes Computerprogramm-Produkt.

Die Erfindung wird nachfolgend anhand eines in den beigeschlossenen Zeichnungen dargestellten Ausführungsbeispiels näher erläutert.

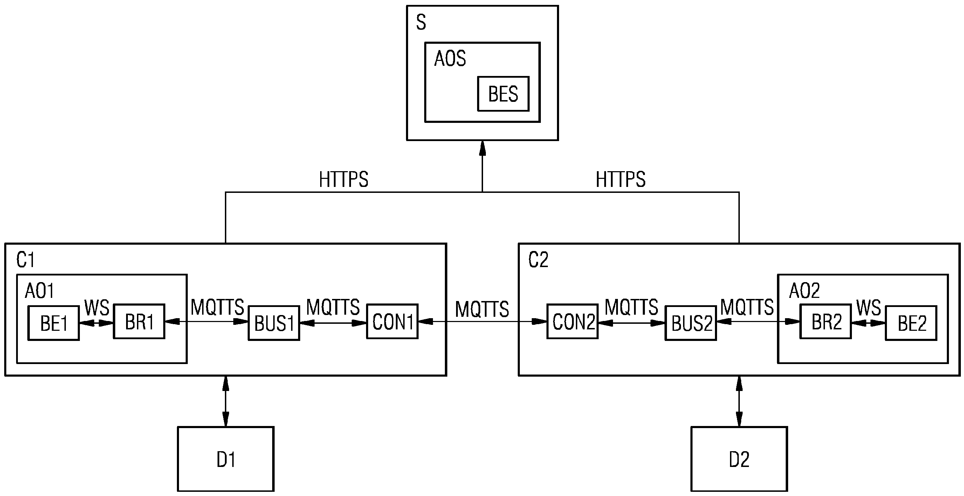

Die Figur zeigt ein Blockschaltbild eines Klienten-Server-Systems als Ausführungsbeispiel der Erfindung.

Ein Server S ist mithilfe eines HTTPS-Protokoll https mit zwei Klienten C1 und C2 verbunden, und somit können Klienten Daten per HTTPS-Protokoll an den Server übermitteln.

Mit den Klienten C1, C2 können beispielsweise jeweilige technische Geräte D1, D2 verbunden sein, welche mit den Daten aus einer lokalen Datenbank der Betriebsmodule AO1, AO2 des jeweiligen Klienten C1, C2 angesteuert werden, nachdem die Datenbanken der Betriebsmodule AO1, AO2 der jeweiligen Klienten C1, C2 unter Anwendung des MQTTS-Protokolls MQTTS synchronisiert wurden.

Der Server S kann beispielsweise die Cloud-Anwendung "MindSphere" beziehungsweise "Insights Hub" von Siemens bereitstellen.

Bei den Klienten C1, C2 kann es sich beispielsweise um Industrial Edge Geräte handeln.

Der Server S weist ein Betriebsmodul AOS, engl. "Asset Operations Analytics" auf.

Das Betriebsmodul AOS umfasst ein Service-Modul BES am Server, engl. "aoa-backend".

Das Betriebsmodul AOS kann als "Mikroservice" realisiert werden und ist für das Aufbereiten von Daten für weitere Betriebsmodule AO1, AO2, welche ebenfalls als "Mikroservices" realisiert sein können, sowie für Datenbankzugriffe zuständig.

Microservices sind ein architekturbezogener und organisatorischer Ansatz in der Softwareentwicklung, bei dem Software aus kleinen unabhängigen Services besteht, die über sorgfältig definierte APIs kommunizieren.

Es kann beispielsweise auf Feathers.js basieren und Schnittstellen via HTTPS und/oder Websockts, zusätzlich zu anderen Mikroservices der jeweiligen Betriebsmodule, bieten.

Feathers ist ein Full-Stack-Webframework zum Erstellen von APIs und Echtzeitanwendungen mit TypeScript oder JavaScript.

Feathers kann mit jeder Backend-Technologie interagieren, unterstützt viele Datenbanken sofort und funktioniert mit jeder Frontend-Technologie wie React, VueJS, Angular, React Native, Android oder iOS.

Das Betriebsmodul AOS kann vom Typ "API" aus dem "Insights Hubs" ein.

Jeder Klient C1, C2 weist ein Betriebsmodul AO1, AO2 auf.

Das jeweilige Betriebsmodul AO1, AO2 umfasst ein Service-Modul BE1, BE2, sowie ein Brücken-Modul BR1, BR2, engl. "aoabridge".

Dabei konvertieren die Brücken-Module BR1, BR2 beispielsweise jeweils zwischen dem WebSocket-Protokoll WS und dem MQTT-Protokoll MQTTS, wobei es im Kontext der Erfindung unerheblich ist, ob das MQTT- oder das MQTTS-Protokoll angewendet werden, wenn es die Anwendung aus Sicherheitsgründen erlaubt.

Da auf der Industrial Edge Plattform in einem industriellen Umfeld Daten verarbeitet und ausgetauscht werden, ist es vorteilhaft das MQTT-Protokoll zu nutzen, welches standardmäßig von der Industrial Edge Plattform unterstützt wird. Es ist demnach nicht notwendig zusätzliche Ports in der Firmware des Industrial Edge Devices freizugeben und somit potenzielle Sicherheitslücken zu erstellen.

Beispielsweise wird mit Hilfe des Brücken-Moduls eine WebSocket-Anfrage zum Erstellen eines neuen Events in der Datenbank in eine MQTT-Nachricht umgewandelt, welche als Attribute die Art der Anfrage (POST), den Endpunkt und die übermittelten Daten des zu erstellenden Events beinhaltet.

Das WebSocket-Protokoll ist ein auf TCP basierendes Netzwerkprotokoll, das entworfen wurde, um eine bidirektionale Verbindung zwischen einer Webanwendung und einem WebSocket-Server bzw. einem Webserver, der auch WebSockets unterstützt, herzustellen.

Die beiden Klienten C1, C2 stehen über ein MQTT-Protokoll MQTTS untereinander in Verbindung, wobei diese Kommunikationsverbindung zwischen jeweiligen Verbindungs-Modulen CON1, CON2, engl. "IE MQTT connector" der Klienten C1, C2, erfolgt.

MQTT(S) ist ein standardisiertes Klient-Server-Protokoll für IoT-Nachrichten, wobei Klienten dem Server ("Broker") nach Verbindungsaufbau Nachrichten senden.

Die Verbindungs-Module CON1, CON2 sind über einen jeweiligen Daten-Bus BUS1, BUS2, engl. "Industrial Edge Databus", mit dem jeweiligen Betriebsmodul AO1, AO2 verbunden.

Bei einer Synchronisierung-Anforderung zwischen jeweiligen Datenbanken auf den Edge-Geräten C1, C2 erfolgt zunächst eine Authentifizierung des jeweiligen Betriebsmoduls AO1, AO2 und dem Betriebsmoduls AOS am Server S.

Die Authentifizierung am Server erfolgt nur, wenn mit diesem auch Daten synchronisiert werden, ansonsten erfolgt die Authentifizierung über MQTTS.

Änderungen können beispielsweise von einem Techniker in einer Instanz jeweiligen Betriebsmoduls auf einem Klienten C1 gespeichert werden, welche dann mit dem anderen Klienten C2 und/oder dem Server S synchronisiert werden.

Die Service-Module BE1, BE2 und die Brücken-Module BR1, BR2 können Mikroservices der Industrial Edge Anwendung, das heißt der Betriebsmodule AO1, AO2 sein.

Die Service-Module BE1, BE2 an den Klienten C1, C2 können beispielsweise auf Feathers.js basieren und können dem Service-Modul BES am Server S entsprechen.

Die Brücken-Module BR1, BR2 an den Klienten C1, C2 können beispielsweise auf Node.js basieren und publizieren Änderungen, welche beispielsweise von einem Techniker in den jeweiligen Betriebsmodulen AO1, AO2 gespeichert werden, über den jeweiligen Industrial Edge Daten-Bus BUS1, BUS2.

Mit anderen Worten kann das Ausführungsbeispiel wie folgt beschrieben werden.

Ein erster Klient C1 weist eine erste Datenbank eines ersten Service-Moduls BE1 auf.

Einen zweiter Klienten C2 weist eine zweite Datenbank eines zweiten Service-Moduls BE2 auf.

Es werden zumindest teilweise Datenbankelemente der ersten Datenbank mit einem Datenbankformat, in einem Protokoll WS, mit der jeweiligen zweiten Datenbank in dem Datenbankformat, ebenfalls in dem Protokoll WS, durch die beteiligten Klienten synchronisiert.

Datenbankelemente mit dem Datenbankformat werden also bereitgestellt, beispielweise durch eine entsprechende Datenbankabfrage, und durch ein Protokoll WS repräsentiert.

Es ist für Mikroservices eines Service-Moduls BE1, BE2 typisch, dass Daten zum/vom Mikroservice durch das WebSocket-Protokoll WS kommuniziert werden.

Die Synchronisierung erfolgt jedoch unter Verwendung eines MQTT-Protokolls direkt zwischen den Klienten C1, C2 unter Verwendung der jeweiligen Verbindungs-Module CON1, CON2 und den Verbindungs-Modulen BUS1 und BUS2 als Empfänger.

Die zu synchronisierenden Datenbankelemente werden mithilfe eines ersten Brücken-Moduls BR1 von dem Datenbankformat, in einem Protokoll WS, in das MQTTS-Protokoll konvertiert, welches erste Brücken-Modul BR1 von dem ersten Klienten C1 umfasst ist.

Die Daten werden auf dem zweiten Klienten C2 von dem Datenbus BUS2 empfangen.

Nach der Übertragung der Datenbankelemente zum zweiten Klienten C2 werden mithilfe eines zweiten Brücken-Moduls BR2 die übertragenen Datenbankelemente wieder von dem MQTTS-Protokoll in das Datenbankformat, in dem Protokoll WS, konvertiert, welches zweite Brücken-Modul BR2 von dem zweiten Klienten C2 umfasst ist.

Die Synchronisierung erfolgt in diesem Beispiel erst nach einer erfolgreichen Authentifizierung der beteiligten Klienten durch den Server des Klienten-Server-Systems.

Die Authentifizierung erfolgt mithilfe eines vom Server S umfassten Service-Moduls BES, welches mit den Service-Modulen BE1, BE2 der beteiligten Klienten C1, C2 kommuniziert.

Die Authentifizierung kann dabei durch die jeweiligen Klienten C1, C2 initiiert werden.

Die Kommunikation der Authentifizierung kann unter Verwendung des HTTPS-Protokolls erfolgen.

Der Server authentifiziert nur dann, wenn die Anfrage auch an ihn geht.

### Bezugszeichenliste:

- AO1, AO2: Betriebsmodul am Kienten
- AOS: Betriebsmodul am Server, engl. "Asset Operations Analytics"
- BE1, BE2: Service-Modul am Klienten, engl. "backend"
- BES: Service-Modul am Server, engl. "aoa-backend"
- BR1, BR2: Brücken-Modul am Klienten, engl. "aoa-bridge"
- BUS1, BUS2: Daten-Bus, engl. "IE databus"
- C1, C2: Klient
- CON1, CON2: Verbindungs-Modul, engl. "IE MQTT connector"
- D1, D2: technisches Gerät
- HTTPS: HTTPS-Protokoll
- MQTTS: MQTTS-Protokoll
- S: Server
- WS: WebSocket-Protokoll

## Patentansprüche

1. Computer-implementiertes Verfahren zur Synchronisation von Datenelementen eines Klienten-Server-Systems, umfassend einen Server (S), einen ersten Klienten (C1) mit einem ersten Service-Modul (BE1), umfassend eine erste Datenbank, und zumindest einen zweiten Klienten (C2) mit einem jeweiligen zweiten Service-Modul (BE2), umfassend eine zweite Datenbank,
wobei zumindest teilweise Datenbankelemente der ersten Datenbank, zugreifbar mit einem Datenprotokoll-Format, welches nicht das MQTT-Protokoll ist, mit der jeweiligen zweiten Datenbank, zugreifbar in dem Datenprotokoll-Format, durch die beteiligten Klienten synchronisiert werden,
wobei die Synchronisierung unter Verwendung des MQTT-Protokolls erfolgt,
und die zu synchronisierenden Datenbankelemente mithilfe eines ersten Brücken-Moduls (BR1), welches vom ersten Klienten (C1) umfasst ist, von dem Datenprotokoll-Format in das MQTTS-Protokoll konvertiert werden und mithilfe eines zweiten Brücken-Moduls (BR2), welches von dem jeweiligen zumindest einen zweiten Klienten (C1) umfasst ist, wieder von dem MQTTS-Protokoll in das Datenprotokoll-Format konvertiert werden.

2. Verfahren nach dem vorhergehenden Anspruch, wobei die Synchronisierung erst nach einer erfolgreichen Authentifizierung der beteiligten Klienten durch den Server des Klienten-Server-Systems erfolgt.

3. Verfahren nach dem vorhergehenden Anspruch, wobei die Authentifizierung mithilfe eines vom Server (S) umfassten Service-Moduls (BES) erfolgt, welches mit den Service-Modulen (BE1, BE2) der beteiligten Klienten (C1, C2) kommuniziert, und vorzugsweise die Authentifizierung durch die jeweiligen Klienten (C1, C2) initiiert wird.

4. Verfahren nach dem vorhergehenden Anspruch, wobei die Kommunikation der Authentifizierung unter Verwendung des HTTPS-Protokolls erfolgt.

5. Verfahren nach einem der vorhergehenden Ansprüche, wobei die Synchronisierung direkt zwischen Klienten erfolgt.

6. Klienten-Server-System, umfassend einen Server (S), einen ersten Klienten (C1) mit einer ersten Datenbank eines ersten Service-Moduls (BE1) und zumindest einen zweiten Klienten (C2) mit einer zweiten Datenbank eines jeweiligen zweiten Service-Moduls (BE2), und die Klienten (C1, C2) dazu eingerichtet sind, das Verfahren nach dem Anspruch 1 auszuführen.

7. Klienten-Server-System nach dem vorhergehenden Anspruch, wobei die Klienten und der Server dazu eingerichtet sind, das Verfahren nach einem der vorhergehenden Ansprüche auszuführen.

8. Computerprogramm-Produkt, umfassend Befehle, welche bei deren Ausführung durch einen Computer diesen veranlassen, das Verfahren nach einem der vorhergehenden Ansprüche auszuführen.

9. Elektronisch Datenspeicher, umfassend das Computerprogramm-Produkt nach dem vorhergehenden Anspruch.
